(19) Europäisches Patentamt / European Patent Office / Office européen des brevets

(11) **EP 4 502 083 A1**

(12) **EUROPEAN PATENT APPLICATION**
published in accordance with Art. 153(4) EPC

(43) Date of publication:
**05.02.2025 Bulletin 2025/06**

(21) Application number: **23780034.7**

(22) Date of filing: **23.03.2023**

(51) International Patent Classification (IPC):
*C09D 1/00* (2006.01)        *C01B 33/145* (2006.01)
*C09D 7/63* (2018.01)        *C09D 183/00* (2006.01)

(52) Cooperative Patent Classification (CPC):
**C01B 33/145; C09D 1/00; C09D 7/63; C09D 183/00**

(86) International application number:
**PCT/JP2023/011476**

(87) International publication number:
**WO 2023/190023 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022   JP 2022059651**

(71) Applicant: **Nitto Denko Corporation**
**Ibaraki-shi, Osaka 567-8680 (JP)**

(72) Inventors:
• **MORISHIMA Ryota**
  **Ibaraki-shi, Osaka 567-8680 (JP)**
• **SHIBUYA Akihiro**
  **Ibaraki-shi, Osaka 567-8680 (JP)**
• **HATTORI Daisuke**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **TRANSPARENT MULTIPORE-FORMING COATING MATERIAL AND TRANSPARENT MULTIPORE-FORMING COATING MATERIAL PRODUCTION METHOD**

(57)     Provided are a transparent porous film-forming paint which can be suitably adopted for spray coating and which can produce a transparent porous film having excellent transparency, and a method of producing a transparent porous film-forming paint. The transparent porous film-forming paint according to an embodiment of the present invention includes: particles; and a dispersion medium in which the particles are dispersed. A concentration of the particles in the paint is from 0.1 wt% to 6.0 wt%. The dispersion medium contains a first dispersion medium having a boiling point of 150°C or more.

**EP 4 502 083 A1**

## Description

Technical Field

The present invention relates to a transparent porous film-forming paint and a method of producing a transparent porous film-forming paint.

Background Art

It has been known that a transparent porous film having a refractive index smaller than that of an optical member is arranged on various optical members to appropriately control optical properties of an optical product including the transparent porous film and the optical members. Such transparent porous film is produced, for example, by coating a base material with a silicone sol paint containing pulverized products of a gel-like silicon compound and a dispersion medium (see, for example, Patent Literature 1). Such transparent porous film has been heretofore produced by die coating an elongated base material with a paint from the viewpoint of production efficiency, and has been used by being peeled from the base material and then bonded to an optical member. However, in recent years, applications for an optical product have been diversified, and direct formation of a transparent porous film on an optical member has been investigated. An optical member may have various shapes (e.g., an irregular shape and a chip shape) depending on its applications, and hence it is desired to form a transparent porous film by spray coating an object with a paint. However, when the silicone sol paint described in Patent Literature 1 is used for spray coating, transparency of the transparent porous film may be reduced.

Citation List

Patent Literature

[PTL 1] JP 2017-25277 A

Summary of Invention

Technical Problem

The present invention has been made to solve the above-mentioned problem of the related art, and a primary object of the present invention is to provide a transparent porous film-forming paint which can be suitably adopted for spray coating and which can produce a transparent porous film having excellent transparency, and a production method therefor.

Solution to Problem

According to an embodiment of the present invention, there is provided a transparent porous film-forming paint including: particles; and a dispersion medium in which the particles are dispersed, wherein a concentration of the particles in the transparent porous film-forming paint is from 0.1 wt% to 6.0 wt%, and wherein the dispersion medium contains a first dispersion medium having a boiling point of 150°C or more.
In one embodiment, a content ratio of the first dispersion medium in the dispersion medium is from 3 wt% to 100 wt%.
In one embodiment, the particles are porous particles of a silicon compound.
According to another aspect of the present invention, there is provided a method of producing a transparent porous film-forming paint, including the steps of: pulverizing a material to be pulverized in a hydrophilic medium to prepare a sol liquid in which particles are dispersed in the hydrophilic medium; and replacing the hydrophilic medium in the sol liquid with a dispersion medium containing a first dispersion medium having a boiling point of 150°C or more, and adjusting a concentration of the particles in the transparent porous film-forming paint to from 0.1 wt% to 6.0 wt%.

Advantageous Effects of Invention

The transparent porous film-forming paint according to the embodiment of the present invention can be suitably adopted for spray coating and can produce a transparent porous film having excellent transparency.

Description of Embodiments

Embodiments of the present invention are described below. However, the present invention is not limited to these embodiments.

A. Outline of Transparent Porous Film-forming Paint

A transparent porous film-forming paint according to one embodiment of the present invention includes particles and a dispersion medium in which the particles are dispersed. The concentration of the particles in the transparent porous film-forming paint is 0.1 wt% or more, preferably 1.0 wt% or more, more preferably 2.0 wt% or more, and is 6.0 wt% or less, preferably 5.0 wt% or less. The dispersion medium contains a first dispersion medium having a boiling point of 150°C or more. The boiling point of the first dispersion medium refers to a boiling point thereof at 1 atm, and is preferably 155°C or more, more preferably 165°C or more, and is, for example, 200°C or less, preferably 190°C or less. According to such configuration, the concentration of the particles in the transparent porous film-forming paint falls within the above-mentioned ranges, and the boiling point of the first dispersion medium in the dispersion medium is equal to or higher than the above-mentioned lower limit. Thus, even when a transparent porous film is produced from the transparent porous film-forming paint through spray coating, excellent transparency can be imparted to the transparent porous film, and surface smoothness of the transparent porous film can be improved.

In one embodiment, the content ratio of the first dispersion medium in the dispersion medium is, for example, 3 wt% or more, preferably 5 wt% or more, more preferably 40 wt% or more, and is, for example, 100 wt% or less, preferably 90 wt% or less, more preferably 60 wt% or less. When the content ratio of the first dispersion medium falls within the above-mentioned ranges, the transparency of the transparent porous film to be produced through spray coating can be further improved.

The dispersion medium may contain the first dispersion medium alone, or may contain a second dispersion medium in addition to the first dispersion medium.

The particles and the dispersion medium in the transparent porous film-forming paint are specifically described below.

B. Particles

The particles are formed of any appropriate material suitable for producing a transparent porous film. As the material for forming the particles, there may be adopted, for example, materials described in WO 2004/113966 A1, JP 2013-254183 A, JP 2012-189802 A, and JP 2017-25277 A. Both of an inorganic substance and an organic substance may be adopted as the materials.

Examples of the inorganic substance for forming the particles include a silicon compound containing Si, a magnesium compound containing Mg, an aluminum compound containing Al, a titanium compound containing Ti, a zinc compound containing Zn, and a zirconium compound containing Zr.

Examples of the organic substance for forming the particles include: organic polymers; polymerizable monomers (e.g., a (meth)acrylic monomer and a styrene-based monomer); and curable resins (e.g., a (meth)acrylic resin, a fluorinecontaining resin, and a urethane resin).

Those materials for forming the particles may be used alone or in combination thereof.

Of those materials, an inorganic substance is a preferred example, and a silicon compound is a more preferred example. Specific examples of the silicon compound include: silica-based compounds; hydrolyzable silanes, and partial hydrolysates and dehydration condensates thereof; silanol group-containing silicon compounds; and active silica obtained by bringing a silicate into contact with an acid or an ion-exchange resin. Of the silicone compounds, a silanol group-containing silicone compound is a preferred example.

In the embodiment of the present invention, the shapes of the "particles" (e.g., porous particles to be described later) are not particularly limited, and may each be a spherical shape or any other shape. Any appropriate shapes may be adopted as the shapes of the particles. Examples of the shapes of the particles include a spherical shape, a plate shape, a needle shape, a string shape, and a botryoidal shape. String-shaped particles are, for example, particles in which a plurality of particles each having a spherical shape, a plate shape, or a needle shape are strung together like beads, short fiber-shaped particles (e.g., short fiber-shaped particles described in JP 2001-188104 A), and a combination thereof. The string-shaped particles may be linear or branched. Botryoidal-shaped particles are, for example, particles in which a plurality of spherical, plate-shaped, and needle-shaped particles aggregate to form a botryoidal shape. The shapes of the particles may be identified through, for example, observation with a transmission electron microscope.

The particles preferably have pores (holes). The particles are, for example, more preferably hollow particles (hollow nanosilica or nanoballoon particles) and porous particles, still more preferably porous particles.

In one embodiment, the particles are porous particles of a silicon compound. According to such configuration, a transparent porous film having desired optical properties can be stably produced. The porous particles of a silicon compound are preferably pulverized products of a gel-like silicon compound obtained by pulverizing the gel-like silicon compound in a medium (typically, a hydrophilic medium). The pulverized products are described in detail later.

In one embodiment, the volume-average particle diameter of the particles (typically, pulverized products) is, for example, 0.05 μm or more, preferably 0.10 μm or more, more preferably 0.20 μm or more, still more preferably 0.40 μm or more, and is, for example, 2.00 μm or less, preferably 1.50 μm or less, more preferably 1.00 μm or less. The volume-average particle diameter indicates a variation in particle size of the particles (pulverized products) in the transparent porous film-forming paint, and may be measured with, for example, a particle size distribution evaluation device of dynamic light scattering, laser diffractometry, or the like, and an electron microscope, such as a scanning electron microscope (SEM) or a transmission electron microscope (TEM).

In one embodiment, in the particle size distribution of the particles (typically, pulverized products), particles each having a particle diameter of from 0.05 μm to 1 μm account for, for example, from 50 wt% to 99.9 wt%, preferably from 80 wt% to 99.8 wt%, more preferably from 90 wt% to 99.7 wt%, and particles each having a particle diameter of from 1 μm to 2 μm account for, for example, from 0.1 wt% to 50 wt%, preferably from 0.2 wt% to 20 wt%, more preferably from 0.3 wt% to 10 wt%. The particle size distribution indicates a variation in particle size of the particles (pulverized products) in the transparent porous film-forming paint, and may be measured with, for example, a particle size distribution evaluation device or an electron microscope.

The content ratio of such particles is adjusted so that the concentration of the particles in the transparent porous film-forming paint falls within the above-mentioned ranges. The content ratio of the particles is, for example, 0.1 part by weight or more, preferably 0.5 part by weight or more, and is, for example, 50 parts by weight or less, preferably 30 parts by weight or less with respect to 100 parts by weight of the dispersion medium.

C. Dispersion Medium

The dispersion medium contains the first dispersion medium having a boiling point equal to or higher than the above-mentioned lower limit. Examples of the first dispersion medium include: dimethyl sulfoxide (DMSO); esters, such as ethylene glycol monoethyl ether acetate and ethyl lactate; and ethers, such as diethylene glycol ethyl methyl ether, diethylene glycol dimethyl ether, dipropylene glycol dimethyl ether, dipropylene glycol monomethyl ether, diethylene glycol diethyl ether, diethylene glycol monomethyl ether, diethylene glycol butyl methyl ether, tripropylene glycol dimethyl ether, triethylene glycol dimethyl ether, diethylene glycol monobutyl ether, ethylene glycol monophenyl ether, triethylene glycol monomethyl ether, diethylene glycol dibutyl ether, triethylene glycol butyl methyl ether, polyethylene glycol dimethyl ether, tetraethylene glycol dimethyl ether, and polyethylene glycol monomethyl ether.

Those first dispersion mediums may be used alone or in combination thereof. Of those first dispersion mediums, esters and ethers are preferred examples, and diethylene glycol ethyl methyl ether and ethylene glycol monoethyl ether acetate are more preferred examples.

In one embodiment, the dispersion medium contains the second dispersion medium having a boiling point within the ranges described below in addition to the first dispersion medium. The boiling point of the second dispersion medium is, for example, less than 150°C, preferably 130°C or less, more preferably 110°C or less, and is, for example, 80°C or more, preferably 90°C or more.

Examples of the second dispersion medium include: alcohols, such as ethanol, isopropyl alcohol, butanol, t-butanol, isobutyl alcohol, and 2-methoxyethanol (methyl cellosolve); esters, such as ethyl acetate and butyl acetate; ethers, such as diisopropyl ether and propylene glycol monomethyl ether; ketones, such as acetone, methyl ethyl ketone, and methyl isobutyl ketone; and aromatic hydrocarbons such as toluene. Those second dispersion mediums may be used alone or in combination thereof. Of the second dispersion mediums, alcohols are more preferred examples, and isobutyl alcohol and 2-methoxyethanol are still more preferred examples.

The content ratio of the second dispersion medium in the dispersion medium is, for example, 0 wt% or more, preferably 5 wt% or more, more preferably 40 wt% or more, and is, for example, 97 wt% or less, preferably 95 wt% or less, more preferably 60 wt% or less. When the content ratio of the second dispersion medium falls within the above-mentioned ranges, the viscosity of the transparent porous film-forming paint can be stably adjusted to a range suitable for spray coating.

D. Method of producing Transparent Porous Film-forming Paint

Next, a method of producing a transparent porous film-forming paint according to one embodiment of the present invention is described. The method of producing a transparent porous film-forming paint includes: a step of pulverizing a material to be pulverized in a hydrophilic medium to prepare a sol liquid in which particles are dispersed in the hydrophilic medium; and a step of replacing the hydrophilic medium in the sol liquid with the above-mentioned dispersion medium, and adjusting the concentration of the particles within the above-mentioned ranges. When the solvent is replaced after the pulverization of the material to be pulverized in this manner, the dispersibility of the particles can be maintained.

In this method, first, the material to be pulverized serving as a raw material for the particles is prepared. A method of preparing the material to be pulverized is, for example, a method described in JP 2017-25277 A, the description of which is incorporated herein by reference in its entirety. More specifically, a precursor of the material for the particles described above (typically, the silicon compound) is gelled in a hydrophilic medium.

Examples of the hydrophilic medium include isopropyl alcohol (IPA), ethanol, methanol, butanol, acetone, dimethylformamide (DMF), and dimethyl sulfoxide (DMSO), and preferred examples thereof include IPA and DMSO. The hydrophilic mediums may be used alone or in combination thereof. In addition, the hydrophilic medium may be mixed with water.

In this way, the material to be pulverized (typically, the gel-like silicon compound) formed of the raw material for the particles described above is prepared. The material to be pulverized (typically, the gel-like silicon compound) is aged in the hydrophilic medium at, for example, from 20°C to 50°C for 10 hours or more.

Next, the material to be pulverized (typically, the gel-like silicon compound) is pulverized in the hydrophilic medium by any appropriate method. The hydrophilic medium may be a mixed medium mixed with water. The pulverization method is not particularly limited, and when the material to be pulverized is a gel-like silicon compound, the pulverization method is, for example, preferably a high-pressure media-less method including using a homogenizer.

In this way, the above-mentioned sol liquid in which the particles are dispersed in the hydrophilic medium is prepared.

Next, the hydrophilic medium in the sol liquid is replaced with the above-mentioned dispersion medium by any appropriate method. A method of replacing the solvent is not particularly limited, and examples thereof include decantation, cross flow filtration, and dynamic filtering. Such replacement method is preferably performed a plurality of times. As required, the concentration of the particles is adjusted within the above-mentioned ranges by using the above-mentioned dispersion medium. In addition, when the hydrophilic medium is a mixed medium mixed with water, the mixed medium is replaced with a hydrophilic medium (typically, an alcohol having 3 or less carbon atoms), and then the hydrophilic medium may be replaced with the above-mentioned dispersion medium.

As the foregoing, a transparent porous film-forming paint containing the above-mentioned particles and the above-mentioned dispersion medium is produced.

E. Spray Coating

The above-mentioned transparent porous film-forming paint may be suitably adopted for spray coating. In the spray coating, the above-mentioned transparent porous film-forming paint is sprayed on a base material (typically, an optical member such as an optical film) serving as an object to form a coating film on the base material. The shape of the base material is not particularly limited. Examples of the shape of the base material viewed from a thickness direction thereof include: a polygonal shape such as a rectangle; a circular shape; an elliptical shape; and an irregular shape having a concave portion and/or a convex portion. In addition, the surface shape of the base material is not particularly limited.

In one embodiment, the base material is spray coated with the transparent porous film-forming paint so that a solid content concentration change rate satisfies the formula (1):

$$1.3 \leq \text{solid content concentration change rate} \leq 60 \cdots (1)$$

in the formula (1), the solid content concentration change rate represents a solid content concentration in the coating film 10 seconds after the spray coating with respect to a solid content concentration in the transparent porous film-forming paint before the spray coating.

When the solid content concentration change rate satisfies the formula (1), the transparency of the transparent porous film can be further improved and thickness unevenness of the transparent porous film can be reduced.

The solid content concentration in the transparent porous film-forming paint before the spray coating is, for example, 0.1 wt% or more, preferably 1.0 wt% or more, more preferably 2.0 wt% or more, and is, for example, 6.0 wt% or less, preferably 3.0 wt% or less.

The solid content concentration in the coating film 10 seconds after the spray coating refers to a solid content concentration in the coating film 10 seconds after the spraying of the paint from a spray head stops, and is, for example, 3.7 wt% or more, preferably 4.5 wt%, and is, for example, 6.5 wt% or less.

In one embodiment, the viscosity [mPa·s] of the coating film 10 seconds after the spray coating satisfies the following formula (2):

$$0.0549e^{1.2x} \leq \text{viscosity of coating film 10 seconds after spray coating} \leq 0.0549e^{3.3x}. \qquad (2)$$

in the formula (2), "e" represents Napier number, and "x" represents a solid content concentration in the coating film 10 seconds after the spray coating.

When the viscosity of the coating film satisfies the formula (2), both of the improvement in transparency of the transparent porous film and the reduction in thickness unevenness thereof can be sufficiently achieved.

In the spray coating, a distance between a spray head for spraying the transparent porous film-forming paint and the base material (coating distance) may be appropriately adjusted. When the distance between the spray head and the base material increases, the solid content concentration change rate increases. When the distance between the spray head and the base material decreases, the solid content concentration change rate may decrease. The distance between the spray head and the base material (coating distance) is, for example, 50 mm or more, preferably 100 mm or more, and is preferably 500 mm or less, preferably 300 mm or less.

In one embodiment, in the spray coating, the spray head sprays the transparent porous film-forming paint while moving in the surface direction of the base material. The atomization pressure of the spray coating is, for example, from 100 kPa to 1,000 kPa, and the spray amount of the spray coating is, for example, from 0.1 mL/min to 20 mL/min. The moving speed of the spray head during the spraying is, for example, from 1 mm/sec to 1,000 mm/sec.

In this way, a coating film, which forms a pore structure that is a precursor of a porous layer (pore layer), is formed on the base material. A case in which the particles are pulverized products of a gel-like compound is mainly described below. However, the coating film may be formed similarly even when the particles are other than the pulverized products of the gel-like compound. The reason why a suitable pore structure is formed in the coating film when the particles are pulverized products of a gel-like compound is presumed, for example, as described below. However, this presumption is not intended to limit the method of forming a transparent porous film.

The above-mentioned particles (porous particles) are obtained by pulverizing the gel-like silicon compound, and hence a state in which the three-dimensional structure of the gel-like silicon compound before the pulverization is dispersed in a three-dimensional basic structure is established. Further, in the above-mentioned method, the spray coating of the base material with the crushed products of the gel-like silicon compound results in the formation of the precursor of a porous structure based on the three-dimensional basic structure. In other words, according to the above-mentioned method, a new porous structure (three-dimensional basic structure) different from the three-dimensional structure of the gel-like silicon compound is formed through the spray coating with the pulverized products. Accordingly, in the transparent porous film to be finally obtained, such a low refractive index that the film functions to the same extent as, for example, an air layer does can be achieved.

Next, the coating film on the base material is dried by heating to form a transparent porous film on the base material. A heating temperature is, for example, 60°C or more, preferably 70°C or more, more preferably 80°C or more, and is, for example, 200°C or less, preferably 120°C or less, more preferably 100°C or less. A heating time is not particularly limited as long as the coating film can be dried sufficiently.

In one embodiment, in this step, a cross-linking reaction occurs among a plurality of particles in the coating film. As a result, a three-dimensional basic structure is fixed. In this way, a transparent porous film to be finally obtained can maintain sufficient strength and flexibility, though the film has a structure having pores.

As the foregoing, the transparent porous film is formed on the base material.

F. Transparent Porous Film

The transparent porous film may be, for example, an open-cell structural body in which hole structures are continuous with each other. The open-cell structural body means that the hole structures are three-dimensionally continuous with each other, and can be said to be a state in which the internal pores of the hole structures are continuous with each other. When the transparent porous film has an open-cell structure, its porosity can be increased. The transparent porous film more preferably has a monolith structure in which an open-cell structure includes a plurality of pore size distributions. The monolith structure means, for example, a hierarchical structure including a structure in which nanosized fine pores are present and an open-cell structure in which the nanosized pores assemble. When the monolith structure is formed, both of film strength and a high porosity can be achieved by, for example, imparting the high porosity to the film through use of a coarse open-cell pore while imparting the film strength thereto through use of a fine pore.

The transparent porous film may be preferably a nanoporous film (specifically, a transparent porous film in which the diameters of 90% or more of micropores fall within the range of from $10^{-1}$ nm to $10^3$ nm).

The porosity of the transparent porous film is, for example, more than 10 vol%, preferably 20 vol% or more, more preferably 30 vol% or more, still more preferably 35 vol% or more, and is, for example, 60 vol% or less, preferably 55 vol% or less, more preferably 50 vol% or less, still more preferably 45 vol% or less. When the porosity falls within such ranges, the refractive index of the transparent porous film can be adjusted to an appropriate range, and a predetermined mechanical strength can be ensured. The porosity is a value calculated from the value of the refractive index measured with an ellipsometer by using Lorentz-Lorenz's formula.

The size of each of the pores (holes) in the transparent porous film refers to a major axis diameter out of the major axis diameter and minor axis diameter of the pore (hole). The sizes of the pores (holes) are, for example, from 2 nm to 500 nm. The sizes of the pores (holes) are, for example, 2 nm or more, preferably 5 nm or more, more preferably 10 nm or more, still more preferably 20 nm or more. Meanwhile, the sizes of the pores (holes) are, for example, 500 nm or less, preferably 200 nm or less, more preferably 100 nm or less. The range of the sizes of the pores (holes) is, for example, from 2 nm to 500 nm, preferably from 5 nm to 500 nm, more preferably from 10 nm to 200 nm, still more preferably from 20 nm to 100 nm. The sizes of the pores (holes) may be adjusted to desired sizes in accordance with, for example, purposes and applications. The sizes of the pores (holes) may be quantified by a BET test method.

The sizes of the pores (holes) may be quantified by a BET test method. Specifically, 0.1 g of a sample (formed pore layer) is loaded into the capillary of a specific surface areameasuring apparatus (manufactured by Micromeritics Instrument Corporation, ASAP 2020), and is then dried under reduced pressure at room temperature for 24 hours so that a gas in its pore structure is removed. Then, an adsorption isotherm is drawn by causing the sample to adsorb a nitrogen gas, and its pore size distribution is determined. Thus, the pore sizes may be evaluated.

The refractive index of the transparent porous film is, for example, 1.25 or less, preferably less than 1.20, more preferably 1.19 or less, still more preferably 1.18 or less, and is typically 1.10 or more. The refractive index refers to a refractive index measured at a wavelength of 550 nm unless otherwise stated.

The total light transmittance of the transparent porous film is, for example, from 85% to 99%, preferably from 87% to 98%, more preferably from 89% to 97%. The haze of the transparent porous film is, for example, less than 5%, preferably less than 3%, more preferably less than 1%. Meanwhile, the haze is, for example, 0.1% or more. The haze may be measured by a method described below.

The transparent porous film is cut into a size measuring 50 mm by 50 mm, and is set in a haze meter (manufactured by Murakami Color Research Laboratory Co., Ltd.: HM-150), followed by the measurement of its haze. The haze value is calculated from the following equation.

Haze (%)=[diffuse transmittance (%)/total light transmittance (%)]$\times$100 (%)

The thickness of the transparent porous film is, for example, from 30 nm to 5 $\mu$m, preferably from 200 nm to 4 $\mu$m, more preferably from 400 nm to 3 $\mu$m, still more preferably from 600 nm to 2 $\mu$m. When the thickness of the transparent porous film falls within the above-mentioned ranges, the transparent porous film can effectively exhibit a total reflection function for light in a visible region to an infrared region.

An example of the specific configuration of the transparent porous film is described below. The transparent porous film of this embodiment is formed of one or a plurality of kinds of constituent units each forming a fine pore structure, and the constituent units are chemically bonded to each other through a catalytic action. Examples of the shape of each of the constituent units include a particle shape, a fiber shape, a rod shape, and a flat plate shape. The constituent units may have only one shape, or may have two or more shapes in combination. A case in which the transparent porous film is a pore layer of a porous body in which the particles are chemically bonded to each other is mainly described below.

Such transparent porous film may be formed by, for example, chemically bonding the particles to each other in the drying step. In one embodiment, the transparent porous film contains the pulverized products of the gel-like compound, and the pulverized products are chemically bonded to each other. The form of the chemical bond (chemical bonding) between the pulverized products in the transparent porous film is not particularly limited, and examples thereof include a cross-linking bond, a covalent bond, and a hydrogen bond. When the pulverized products of the gel-like silicon compound are used, the particles each have a three-dimensional dendritic structure, and hence the dendritic particles are sedimented and deposited in the coating film (coating film of the sol containing the pulverized products of the gel-like silicon compound). Accordingly, an open-cell structure can be easily formed. In addition, in such transparent porous film, the monolith structure may be formed by, for example, controlling the particle size distribution of the particles after the pulverization to a desired size at the time of the pulverization of the gel-like silicon compound.

In addition, in the transparent porous film (pore layer), for example, silicon atoms to be incorporated preferably form a siloxane bond. As a specific example, the ratio of unbonded silicon atoms (in other words, residual silanol groups) out of all the silicon atoms in the pore layer is, for example, less than 50%, preferably 30% or less, more preferably 15% or less.

Examples

The present invention is specifically described below by way of Examples. However, the present invention is not limited to these Examples. Measurement methods for characteristics are as described below. In addition, the terms "%" and "part(s)" in Examples are by weight unless otherwise stated.

(1) Determination of Discharge/no-discharge

A transparent porous film-forming paint obtained in each of Examples and Comparative Examples and an alkali-free glass serving as a base material were set in a spray coater (manufactured by API Corporation, product name: API-240). The distance between a spray head (nozzle) and the alkali-free glass was 100 mm.

Then, under the coating conditions of an atomization pressure of 100 kPa and a spray amount of 7 mL/min, the alkali-free glass was spray coated with the transparent porous film-forming paint. Determination of discharge or no-discharge of the paint in the spray coating was evaluated by the following criteria. The results are shown in Table 1.

∘: Atomization of the transparent porous film-forming paint can be visually recognized.
×: Atomization of the transparent porous film-forming paint cannot be visually recognized.

In addition, the haze of the resultant transparent porous film is shown in Table 1.

[Examples 1 to 6, and Comparative Examples 1 and 2]

(1) Gelation of Silicon Compound

0.95 g of methyltrimethoxysilane (MTMS) that was a precursor of a silicon compound was dissolved in 2.2 g of dimethyl sulfoxide (DMSO). Thus, a mixed liquid A was prepared. 0.5 g of a 0.01 mol/L aqueous solution of oxalic acid was added to the mixed liquid A, and the mixture was stirred at room temperature (23°C) for 30 minutes so that MTMS was hydrolyzed. Thus, a mixed liquid B containing tris(hydroxy)methylsilane was produced.
0.38 g of 28 wt% ammonia water and 0.2 g of pure water were added to 5.5 g of DMSO, and then the mixed liquid B was further added to the mixture, followed by stirring at room temperature (23°C) for 15 minutes to perform the gelation of tris(hydroxy)methylsilane. Thus, a mixed liquid C containing a gel-like silicon compound was obtained.

(2) Aging Treatment

Aging treatment was performed by incubating the mixed liquid C containing the gel-like silicon compound, which had been prepared as described above, as it was at 40°C for 20 hours.

(3) Pulverization Treatment

Next, the gel-like silicon compound (material to be pulverized) subjected to the aging treatment as described above was subjected to pulverization treatment (high-pressure media-less pulverization). The pulverization treatment (high-pressure media-less pulverization) was performed as follows: a homogenizer (manufactured by SMT Co., Ltd., product name: "UH-50") was used, and 1.85 g of the gel-like silicon compound in the mixed liquid D and 1.15 g of IPA were weighed in a 5-cubic centimeter screw bottle, followed by the performance of the pulverization of the mixture under the conditions of 50 W and 20 kHz for 2 minutes.
The gel-like silicon compound in the mixed liquid C was pulverized by the pulverization treatment. Thus, the mixed liquid C was turned into a sol liquid D of the pulverized products (porous particles of the silicon compound).
Next, a dispersion medium shown in Table 1 was added to the sol liquid D of the pulverized products, and the mixture was lightly stirred. After that, the mixture was left at rest at room temperature for 6 hours so that the dispersion medium in the gel and the catalyst were decanted. Similar decantation treatment was performed three times to replace the solvent.
As the foregoing, a transparent porous film-forming paint was obtained. The concentration of the pulverized products (particle concentration) in the paint is shown in Table 1. A volume-average particle diameter representing a variation in particle size of the pulverized products in the paint was determined to be from 0.50 to 0.70 with a dynamic light scattering-type Nanotrac particle size analyzer (manufactured by Nikkiso Co., Ltd., model UPA-EX150).

Table 1

| No. | Dispersion medium | | | | | Particle concentration | Discharge/no-discharge | Haze |
|---|---|---|---|---|---|---|---|---|
| | First dispersion medium | | Second dispersion medium | | First dispersion medium/second dispersion medium [weight ratio] | | | |
| | Kind | Boiling point [°C] | Kind | Boiling point [°C] | | [wt%] | [-] | [%] |
| Example 1 | EDM | 176 | IBA | 108 °C | 1:1 | 0.1 | ○ | ○0.1 |
| Example 2 | EDM | 176 | IBA | 108°C | 1:1 | 3.0 | ○ | ○0.1 |

(continued)

| No. | Dispersion medium | | | | | Particle concentration | Discharge/no-discharge | Haze |
| | First dispersion medium | | Second dispersion medium | | First dispersion medium/second dispersion medium [weight ratio] | | | |
| | Kind | Boiling point [°C] | Kind | Boiling point [°C] | | [wt%] | [-] | [%] |
|---|---|---|---|---|---|---|---|---|
| Example 3 | EDM | 176 | IBA | 108°C | 5:95 | 3.0 | ○ | ○0.1 |
| Example 4 | EDM | 176 | - | - | - | 3.0 | ○ | ○0.1 |
| Example 5 | EMEA | 156 | - | - | - | 3.0 | ○ | ○0.1 |
| Example 6 | EDM | 176 | IBA | 108°C | 1:1 | 6.0 | ○ | ○0.1 |
| Comparative Example 1 | - | - | IBA | 108°C | - | 3.0 | ○ | ×3.0 |
| Comparative Example 2 | EDM | 176 | IBA | 108°C | 1:1 | 6.4 | × | - |

Details about abbreviations in the table are described below.

IBA: isobutyl alcohol, manufactured by Tokyo Kasei Kogyo Co., Ltd.
EDM: diethylene glycol ethyl methyl ether, manufactured by Toho Chemical Industry Co., Ltd.
EMEA: ethylene glycol monoethyl ether acetate, manufactured by Tokyo Kasei Kogyo Co., Ltd.

As is apparent from Table 1, according to Examples of the present invention, when the dispersion medium contains the first dispersion medium having a boiling point of 150°C or more and the particle concentration in the paint is adjusted to 6 wt% or less, spray coating of the paint is enabled, and a transparent porous film having a low haze and an excellent appearance can be achieved.

Industrial Applicability

The transparent porous film-forming paint according to the embodiment of the present invention may be suitably used for production of a transparent porous film to be used in various optical products.

**Claims**

1. A transparent porous film-forming paint, comprising: particles; and a dispersion medium in which the particles are dispersed,

   wherein a concentration of the particles in the transparent porous film-forming paint is from 0.1 wt% to 6.0 wt%, and
   wherein the dispersion medium contains a first dispersion medium having a boiling point of 150°C or more.

2. The transparent porous film-forming paint according to claim 1, wherein a content ratio of the first dispersion medium in the dispersion medium is from 3 wt% to 100 wt%.

3. The transparent porous film-forming paint according to claim 1 or 2, wherein the particles are porous particles of a silicon compound.

4. A method of producing a transparent porous film-forming paint, comprising the steps of:

   pulverizing a material to be pulverized in a hydrophilic medium to prepare a sol liquid in which particles are dispersed in the hydrophilic medium; and
   replacing the hydrophilic medium in the sol liquid with a dispersion medium containing a first dispersion medium having a boiling point of 150°C or more, and adjusting a concentration of the particles to from 0.1 wt% to 6.0 wt%.

## INTERNATIONAL SEARCH REPORT

| International application No. |
| --- |
| **PCT/JP2023/011476** |

| **A.** | **CLASSIFICATION OF SUBJECT MATTER** |
| --- | --- |

*C09D 1/00*(2006.01)i; *C01B 33/145*(2006.01)i; *C09D 7/63*(2018.01)i; *C09D 183/00*(2006.01)i
FI:   C09D1/00; C01B33/145; C09D7/63; C09D183/00

According to International Patent Classification (IPC) or to both national classification and IPC

| **B.** | **FIELDS SEARCHED** |
| --- | --- |

Minimum documentation searched (classification system followed by classification symbols)

C09D

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | JP 2011-110919 A (JGC CATALYSTS & CHEMICALS LTD) 09 June 2011 (2011-06-09) claims 1, 5, paragraph [0070], examples 1-6 | 1-3 |
| Y | JP 2011-89006 A (FUJITSU LTD) 06 May 2011 (2011-05-06) paragraph [0021] | 1-3 |
| A | JP 2001-287909 A (ASAHI KASEI CORP) 16 October 2001 (2001-10-16) claim 1, example 1 | 1-4 |
| A | JP 2017-25277 A (NITTO DENKO CORP) 02 February 2017 (2017-02-02) example 1 | 1-4 |
| P, X | CN 114316724 A (GUANGDONG MEIGUISHI BUILDING MATERIAL CO., LTD.) 12 April 2022 (2022-04-12) claims 1, 6, example 1 | 1-3 |

☐ Further documents are listed in the continuation of Box C.     ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **24 April 2023** | **16 May 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/011476**

| Patent document cited in search report | | | Publication date (day/month/year) | Patent family member(s) | | | Publication date (day/month/year) |
|---|---|---|---|---|---|---|---|
| JP | 2011-110919 | A | 09 June 2011 | (Family: none) | | | |
| JP | 2011-89006 | A | 06 May 2011 | (Family: none) | | | |
| JP | 2001-287909 | A | 16 October 2001 | (Family: none) | | | |
| JP | 2017-25277 | A | 02 February 2017 | US | 2017/0349784 | A1 | |
| | | | | example 1 | | | |
| | | | | WO | 2016/104765 | A1 | |
| | | | | EP | 3239257 | A1 | |
| | | | | CN | 107109125 | A | |
| | | | | KR | 10-2017-0100546 | A | |
| CN | 114316724 | A | 12 April 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017025277 A
- WO 2004113966 A1
- JP 2013254183 A
- JP 2012189802 A
- JP 2001188104 A